# EUROPÄISCHE PATENTSCHRIFT

(11) **EP 1 397 548 B1**
(45) Veröffentlichungstag und Bekanntmachung des Hinweises auf die Patenterteilung: **23.02.2005**
(21) Anmeldenummer: 02732656.0
(22) Anmeldetag: 24.04.2002
(51) Int. Cl.: D06M 15/643, C08G 77/388, C08L 83/08

(54) **AMIDOFUNKTIONELLE AMINOPOLYDIORGANOSILOXANE**
AMIDOFUNCTIONAL AMINOPOLYDIORGANOSILOXANES
AMINOPOLYDIORGANOSILOXANES AMIDOFONCTIONNELS

(30) Priorität: 27.04.2001 DE 10120754
(43) Veröffentlichungstag der Anmeldung: 17.03.2004
(73) Patentinhaber: CHT R. BEITLICH GmbH, 72072 Tübingen (DE)
(72) Erfinder: KOCH, Matthias, 28359 Bremen (DE); NICKEL, Friedhelm, 27367 Hellwege (DE); NOSTADT, Konrad, 72760 Reutlingen (DE)
(74) Vertreter: Jönsson, Hans-Peter, Dr.Dipl.-Chem.
(86) Internationale Anmeldenummer: PCT/EP2002/004482
(87) Internationale Veröffentlichungsnummer: WO 2002/088456

(56) Entgegenhaltungen:
- EP-A- 1 081 272
- DE-A- 4 131 551
- US-A- 5 100 991

## Beschreibung

Gegenstand der Erfindung sind amidofunktionelle Aminopolydiorganosiloxane, ein Verfahren zu ihrer Herstellung, Zubereitungen enthaltend die amidofunktionellen Aminopolydiorganosiloxane sowie deren Verwendung.

Die Patentschrift US-A 4591652 betrifft Polyhydroxyl-Silane oder Siloxane, die als Träger für Überzüge von Metall-, Mineral- oder Glasoberflächen eingesetzt werden. Die beschriebenen Polyhydroxylverbindungen werden durch die Reaktion eines Silans oder eines endständig aminsubstituierten Siloxans mit Aldonsäurelactonen hergestellt; bevorzugt ist das Gluconsäurelacton. Die Reaktion erfolgt in alkoholischer Lösung. Die sich dabei bildenden Produkte sind wasserlöslich und polymerisieren bei erhöhten Temperaturen zu harten, wasserunlöslichen, fest anhaftenden Filmen.

Die Patentschrift US-A 4104296 beschreibt organofunktionelle Silikonkomponenten mit Hydroxyalkylamidofunktionalitäten, die über einen divalenten Kohlenwasserstoffrest mit mindestens drei Kohlenstoffatomen an die Silikonkette angebunden sind. Die Silikonkomponenten werden über die Reaktion eines Aminoalkylsilans oder -siloxans mit einem Lacton, abgeleitet von einer β-Hydroxycarbonsäure mit einer Kettenlänge von C₃ - C₉, hergestellt. Diese Komponenten sollen die Adhäsion verschiedener Harze zu anorganischen Substraten verbessern.

Werden die in den oben genannten Patenschriften US-A 4591652 und US-A 4104296 beschriebenen Polyhydroxysilane bzw. die Silikonkomponenten mit Hydroxyalkylfunktionalitäten statt zur Oberflächenmodifikation von Metall-, Mineral- oder Glasoberflächen als Ausrüstungsmittel für textile Fasern bzw. Faserstoffe eingesetzt, genügen die harzartigen hochvernetzten Reaktionsprodukte in Bezug auf den Weichgriff nicht den gewünschten Anforderungen.

Die Patentschrift US-A 5100991 beschreibt amidofunktionelle Polyorganosiloxane, die durch die Umsetzung von aminofunktionellen Polyorganosiloxanen mit Lactonen hergestellt werden. Bevorzugte Lactone umfassen Stoffe, die sich von Monohydroxysäuren ableiten wie beispielsweise γ-Butyrolacton und ε-Caprolacton, die unter Erhitzen mit den aminofunktionellen Polyorganosiloxanen zur Reaktion gebracht werden. Es wird festgehalten, dass die Reaktion bevorzugt ohne Lösemittel erfolgt, kann aber auch in Lösemittel wie Methylethylketon, Toluol oder Ethanol oder optional in wässrigen Emulsionen durchgeführt werden. Hierbei muss aber mit einem deutlichen Ausbeutenverlust gerechnet werden, da die beschriebenen Lactone im wässrigen Medium zur entsprechenden Hydroxycarbonsäure hydrolysieren, die unter den beschriebenen Bedingungen nicht mehr mit den aminofunktionellen Polyorganosiloxanen reagieren.

Die EP 1 033 434 A1 betrifft eine Faserbehandlungs-Zusammensetzung enthaltend amidofunktionelle Polyorganosiloxane in Kombination mit einem Alkylsulfatsalz einer Benzimidazolin-Verbindung. Bei der Herstellung der Verbindungen werden Lactone zur Solubilisierung der Alkylsulfatsalze der Benzimidazolin-Verbindung eingesetzt, die während der Reaktion verbraucht werden. Bevorzugte Lactone umfassen beispielsweise γ-Butyrolacton und ε-Caprolacton. Es wird in der Beschreibung festgehalten, dass das Lacton in einer derartigen Menge an die eingangs genannte Verbindung addiert werden soll, das 30 bis 70 Mol.-% der Aminfunktionalität der aminofunktionellen Polysiloxane in Amidbindungen umgesetzt wird. Es wird weiterhin festgehalten, dass für den Fall, dass mehr als 70 % der Aminfunktionalität der aminofunktionellen Polysiloxane reagieren, eine Verschlechterung des Weichmachereffekts der Zusammensetzung auftreten kann.

Die EP 1081272 A1 betrifft eine Faserbehandlungs-Zusammensetzung, die als Wirkstoff entweder ein Gemisch von a) 50 - 99 Gew.-% amin, polyolfunktionellen Siloxanen und b) 1 - 50 Gew.-% polyol, amidofunktionellen Siloxanen oder amin, polyol, amidofunktionelle Siloxane enthält. Bei der Herstellung der Verbindungen werden aminofunktionelle Siloxane mit epoxifunktionellen Verbindungen und Lactonen umgesetzt, wobei γ-Butyrolacton und ε-Caprolacton bevorzugt werden. Weiterhin wird festgehalten, dass die Kombination von Amin-, Polyol- und Amidfunktionalitäten synergistische Effekte zeigten, die die Vergilbungseigenschaften sowie die Hydrophilie ohne drastische Beeinträchtigung des Griffes verbessert.

Die zur Faserbehandlung beanspruchten Umsetzungsprodukte von Aminosiloxanen mit Lactonen und ggf. Epoxiverbindungen bzw. deren Zubereitungen mit Alkylsulfatsalzen einer Benzimidazolin-Verbindung nach den Patenten US-A 5100991, EP 1033434 A1 und EP 1081272 A1, bringen hinsichtlich des Weißgrades und der Hydrophilie eine Verbesserung, was aber zu Lasten der Scherstabilität und des Weichgriffs geht, vor allem wenn die Ausrüstung auf schnelllaufenden Färbeapparaten erfolgt.

JP 62 68,820 (CA 1988, vol. 108, No.8, 56828s) beschreibt die Herstellung von Siloxanen mit wenigstens einem Zuckerrest, die für die Verwendung u. a. in nichtionischen oberflächenaktiven Mitteln oder Kosmetika von Nutzen sind. Sie werden hergestellt, indem Siloxane, die mindestens eine primäre Aminogruppe tragen, mit Lactonen umgesetzt werden, die aus intramolekularer Dehydrocyclisierung von Aldon- oder Uronsäuren stammen. Es wird angesichts der Verwendung als Tensid davon ausgegangen, daß eine vollständige Umsetzung aller Aminogruppen stattgefunden hat.

In DE 43 18 536 A1 werden siloxanmodifizierte Verbindungen, deren Herstellung sowie deren Verwendung als grenzflächenmodifizierende Mittel insbesondere im Pflanzenschutz oder zur Herstellung von grenzflächenaktiven und grenzflächenmodifizierenden Mitteln beschrieben. Dabei trägt ein Teil der Siloxankettenglieder an einen Spacer gebundene Mono- oder Oligosaccharide, die wiederum Aminoder Amidfunktionalitäten aufweisen können. Diese Verbindungen werden in einem zweistufigen, aufwendigen Verfahren hergestellt. Analog zur JP 62 68,820 sind hier die aminogruppentragenden Spacer stets zuckerfunktionalisiert. Ein positiver Einfluß der Aminogruppen, insbesondere von primären Aminen, auf Weichgriff und Substantivität, kann so wegen sterischer Hinderung durch mehrfach hydroxylierte Kohlenwasserstoffe nicht erreicht werden.

EP 1 081 272 A1 betrifft Siloxane, die Amino-, Polyol- und Amidfunktionalitäten aufweisen, sowie Faserbehandlungsmittel, die diese enthalten. Die offenbarten Siloxangrundgerüste sind dabei über in der Synthese aufwendig zu realisierende Aminogruppen mit den Polyoleinheiten verknüpft. Eine Verknüpfung der Polyoleinheiten mit dem Siloxangrundgerüst über Amidbrücken wird nicht offenbart.

EP 0 335 407 A2 beschäftigt sich mit Polyolefin-Zusammensetzungen, die zu Filmmaterial extrudiert werden können. Sie zeichnen sich durch verbesserte Stabilität und optische Eigenschaften aus. Insbesondere werden Zusammensetzungen beschrieben, die Polyorganosiloxane mit Hydroxylfunktionalität enthalten. Dabei sind entweder endständige Dihydroxyalkane über eine Etherbrücke oder endständige Monohydroxyalkane über eine Aminofunktionalität mit einem Spacer und der Siloxankette verbunden. Über eine in der Synthese einfach zu realisierende Amidfunktion gebundene Mono- oder Oligohydroxy-Carbonsäuren werden nicht offenbart.

In DE 198 54 186 A1 werden grenzflächenaktive Organosiliciumverbindungen offenbart, die mit mono- oder polyhydroxylierten Kohlenwasserstoff-resten bzw. Kohlenhydratderivaten modifiziert sind. Dabei liegt der polyhydroxylierte Kohlenwasserstoffrest bzw. der Kohlenhydratrest stets in nichtoxidierter Form und notwendig über eine glycosidische Bindung mit dem an das Polysiloxangerüst gebundenen Spacer verknüpft vor. Glycosidische Bindungen haben jedoch unter anderem den Nachteil, dass sie nur unter großem experimentellem Aufwand vollständig und selektiv realisiert werden können und zudem ihre Stabilität in hohem Maße vom pH-Wert des Mediums abhängt.

In JP 01-099 640 A werden polymere Emulgatoren auf Polysiloxanbasis offenbart, die Hydroxylgruppen enthalten können und wegen geringer pH-, Lösungsmittel-, Ionen-, Hitze- und Hydrolyseempfindlichkeit zur Herstellung von Farbe dienen. Diese Polysiloxane enthalten keine sterisch ungehinderten, beispielsweise primären Aminogruppen, haben daher geringe oder gar keine Permanenz auf Textilien und sind ungeeignet, Textilien Weichgriff zu verleihen.

Der vorliegenden Erfindung lag die Aufgabe zugrunde amidofunktionelle Aminopolydiorganosiloxane, insbesondere für ein Ausrüstungsmittel zu finden, das neben einem verbesserten Weichgriff eine hohe Vergilbungsresistenz zeigt und problemlos auf scherkraftreichen Applikationsanlagen aufgebracht werden kann.

Gegenstand der Erfindung sind in einer ersten Ausführungsform amidofunktionelle Aminopolydiorganosiloxane der allgemeinen Formel (I) 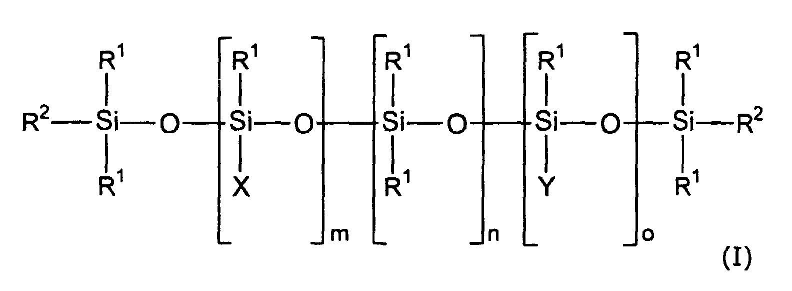 wobei R¹ für gleiche oder verschiedene, einwertige, gegebenenfalls Fluor-, Chlor- oder Brom-substituierte C₁- bis C₁₈-Kohlenwasserstoffreste, Wasserstoffatome, C₁- bis C₁₂-Alkoxy- oder Hydroxyreste oder Alkylglykolreste steht,
R² für R¹ und/oder eine der Gruppen X und/oder Y steht,
X eine Gruppe der allgemeinen Formeln (II) und/oder (III)

-R³NZR⁴ (II)

-R³NR⁵(CH₂)pNZR⁴ (III)

wobei R³ für einen zweiwertigen C₁-bis C₁₈-Kohlenwasserstoffrest,
R⁴ für ein Wasserstoffatom oder einen gegebenenfalls Fluor-, Chloroder Brom substituierten C₁- bis C₁₀-Alkylrest steht,
Z abgeleitet ist von Hydroxycarbonsäuren und oxidierten Mono- und Disacchariden, jeweils mit wenigstens 2 Hydroxylgruppen,
R⁵ für ein Wasserstoffatom und/oder Z steht,
Y für eine Gruppe der allgemeinen Formel (IV) und/oder (V) steht

-R³NHR⁴ (IV)

-R³NH(CH₂)pNHR⁴ (V)

wobei R³ und R⁴ die oben genannten Bedeutungen haben,
m den durchschnittlichen Wert von 0,5 bis 50,
n den durchschnittlichen Wert von 10 bis 1500,
o den durchschnittlichen Wert von 0 bis 50 hat und
p für die Werte 2, 3 oder 4 steht,
mit der Maßgabe, dass das Verhältnis von m zu o im Bereich von 10 : 1 bis 0,1 : 1 liegt.

Beispiele für C₁-C₁₈-Kohlenwasserstoffreste R¹ umfassen Alkylreste, wie der Methyl-, Ethyl-, n-Propyl-, iso-Propyl-, n-Butyl-, iso-Butyl-, tert.-Butyl, n-Pentyl-, neo-Pentyl-, tert.-Pentylrest, Hexylreste, Heptylreste, wie der n-Heptylrest, Octylreste und iso-Octylreste, wie der 2,2,4-Trimethylpentylrest; Nonylreste, wie der n-Nonylrest, Decylreste, wie der n-Decylrest; Dodecylreste, wie der n-Dodecylrest, Cycloalkylreste, wie der Cyclopentyl-, Cyclohexyl-, Cycloheptylreste und Methylcyclohexylreste, Arylreste, wie der Phenyl- und der Naphthylrest, Alkarylreste, wie o-, m-, p-Tolylreste, Xylylreste und Ethylphenylreste; Aralkylreste, wie der Benzylrest, der α- und der β-Phenylethylrest.

Die vorstehenden Kohlenwasserstoffreste enthalten gegebenenfalls eine aliphatische Doppelbindung. Beispiele sind Alkenylreste, wie der Vinyl-, Allyl-, 5-Hexen-1-yl-, E-4-Hexen-1-yl-, Z-4-Hexen-1-yl-, 2-(3-Cyclohexenyl)-ethyl- und Cyclododeca-4,8-dienylrest. Bevorzugte Reste mit aliphatischer Doppelbindung sind der Vinyl-, Allyl-, und 5-Hexen-1-ylrest. Vorzugsweise enthalten jedoch höchstens 1% der Kohlenwasserstoffreste R¹ eine Doppelbindung.

Beispiele für mit Fluor-, Chlor- oder Bromatomen substituierte C₁- bis C₁₈-Kohlenwasserstoffreste sind der 3,3,3-Trifluor-n-propylrest, der 2,2,2,2',2',2'-Hexafluorisopropylrest, der Heptafluorisopropylrest und der o-, m- und p-Chlorphenylrest.

Beispiele für C₁- bis C₁₀-Alkylreste R⁴ sind die vorstehend bei R¹ aufgeführten Beispiele für lineare und cyclische Alkylreste und für mit Fluor-, Chlor- oder Bromatomen substituierten C₁ bis C₁₀-Alkylreste.

Beispiele für die zweiwertigen C₁- bis C₁₈-Kohlenwasserstoffreste R² sind gesättigte gerad- oder verzweigtkettige oder cyclische Alkylenreste wie der Methylen- und Ethylenrest sowie Propylen-, Butylen-, Pentylen-, Hexylen-, 2-Methylpropylen-, Cyclohexylen- und Octadecylenreste oder ungesättigte Alkylen- oder Arylenreste wie der Hexenylenrest und Phenylenrest, wobei der n-Propylenrest und der 2-Methylpropylenrest besonders bevorzugt sind. Die Alkoxyreste sind über ein Sauerstoffatom gebundene vorstehend beschriebene Alkylreste. Die Beispiele für Alkylreste gelten im vollen Umfang auch für die Alkoxyreste.

Die Alkylglykolreste R¹ weisen vorzugsweise die allgemeine Formel (X)

-R³-[O(CHR⁴)₂]_{q}OR⁷ (X)

auf, in der R³, R⁴ die vorstehende Bedeutung haben, q den Wert 1 bis 100 hat und R⁷ für ein Wasserstoffatom, für einen Rest R⁴ oder für eine Gruppe der allgemeinen Formel 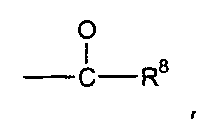 steht, wobei R⁸ für den Rest R⁴ oder O-R⁴ steht.

Die Gruppe Z steht für Reste, die sich mit wenigstens 2 Hydroxylgruppen von Hydroxycarbonsäuren und oxidierten Mono- und Disacchariden ableiten. Bevorzugt sind oxidierte Monosaccharide wie Uron-, Aldar und Aldonsäuren der allgemeinen Formeln (VI), (VII) und (VIII)

O=CH-[CH(OH)]ₛ-CO- (VI)

HOOC-[CH(OH)]ₛ-CO- (VII)

HOCH₂-[CH(OH)]ₛ-CO- (VIII),

mit 2 ≤ s ≤ 10.

Beispiele für die Gruppe Z umfassen Reste der Mevalonsäure, Galacturonsäure, Glucuronsäure, L-Iduronsäure, Galactarsäure, Glucarsäure, Gluconsäure, Mannonsäure, 2-Keto-L-gulonsäure und Reste, die sich von den Formeln (XI) und (XII) 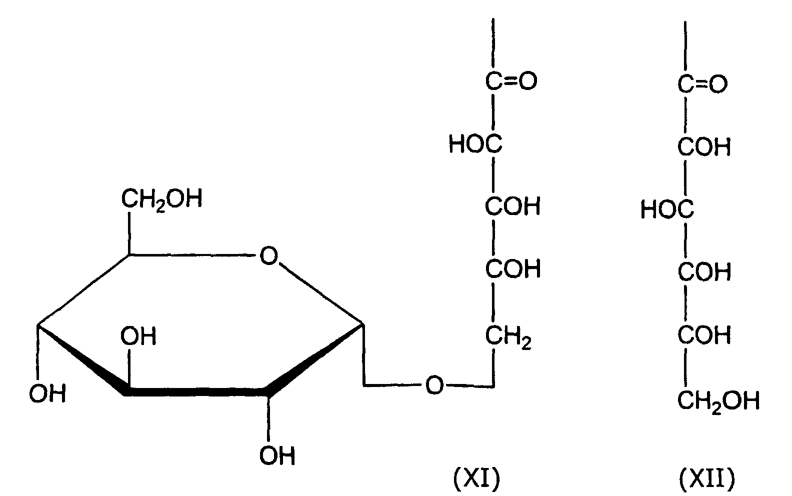 ableiten.

Besonders bevorzugt eingesetzt werden im Sinne der vorliegenden Erfindung bei Raumtemperatur feste Lactone.

In den vorstehenden allgemeinen Formeln (I) bis (V) sowie (X) stehen vorzugsweise, unabhängig voneinander:
R¹ für einen Methyl-, Phenyl-, C₁ - C₃-Alkoxy- oder Hydroxyrest oder einen Rest der allgemeinen Formel (X),
R² für einen Rest R¹,
R³ für einen zweiwertigen C₂ bis C₆-Kohlenwasserstoffrest,
R⁴ für ein Wasserstoffatom oder ein C₂ bis C₆- Alkylrest,
m hat die Werte 0,5 bis 10,
n hat die Werte 40 bis 600,
o hat die Werte 0 bis 10 und
p den Wert 2.

Dabei sind solche amidofunktionellen Aminopolydiorganosiloxane besonders bevorzugt, in denen das Verhältnis von m zu o im Bereich von 5 : 1 bis 1 : 1 liegt.

Eine weitere Ausführungsform der vorliegenden Erfindung besteht in der Herstellung der oben genannten amidofunktionellen Polydioganosiloxane, indem man ein aminofunktionelles Polydiorganosiloxan mit der allgemeinen Formel (IX), 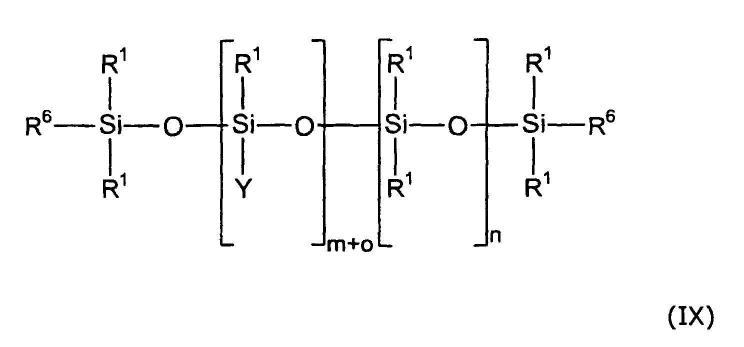 wobei R¹ für gleiche oder verschiedene, einwertige, gegebenenfalls Fluor-, Chlor- oder Brom-substituierte C₁- bis C₁₈-Kohlenwasserstoffreste, Wasserstoffatome, C₁- bis C₁₂-Alkoxy- oder Hydroxyreste oder Alkylglykolreste steht,
R⁶ für R¹ und/oder eine Gruppe Y steht,
Y für eine Gruppe der allgemeinen Formel (IV) und/oder (V) steht

-R³NHR⁴ (IV)

-R³NH(CH₂)ₚNHR⁴ (V)

wobei R³ für einen zweiwertigen C₁-bis C₁₈-Kohlenwasserstoffrest,
R⁴ für ein Wasserstoffatom oder einen gegebenenfalls Fluor-, Chloroder Brom substituierten C₁- bis C₁₀-Alkylrest steht,
m den durchschnittlichen Wert von 0,5 bis 50,
n den durchschnittlichen Wert von 10 bis 1500,
o den durchschnittlichen Wert von 0 bis 50 hat und
p für die Werte 2, 3 oder 4 steht,
mit der Maßgabe, dass das Verhältnis von m zu o im Bereich von 10 : 1 bis 0,1 : 1 liegt,
gegebenenfalls in Gegenwart eines Lösemittels mit einem Lacton einer Hydroxycarbonsäure mit wenigstens 2 Hydroxylgruppen bei Temperaturen im Bereich von 10 bis 150 °C umsetzt.

Beispiele für R¹, R³, R⁴, m, n, o und p entsprechen den zuvor Beschriebenen.

In den vorstehenden allgemeinen Formeln (IX), (IV) und (V) stehen vorzugsweise, unabhängig voneinander:
R¹ für einen Methyl-, Phenyl-, C₁ - C₃-Alkoxy- oder Hydroxyrest oder einen Rest der allgemeinen Formel (X),
R⁶ für einen Rest R¹,
R³ für einen zweiwertigen C₂ bis C₆-Kohlenwasserstoffrest,
R⁴ für ein Wasserstoffatom oder ein C₂ bis C₆- Alkylrest,
m hat die Werte 0,5 bis 10,
n hat die Werte 40 bis 600,
o hat die Werte 0 bis 10 und
p hat den Wert 2.

Bevorzugte aminofunktionelle Aminopolydiorganosiloxane der allgemeinen Formel (IX) sind lineare Polydimethylsiloxane, die gegebenenfalls C₁ bis C₃-Alkoxy- oder Hydroxyendgruppen aufweisen. Der titrierbare Stickstoffgehalt beträgt vorzugsweise w(N) = 0,01 bis 2% insbesondere 0,1 bis 1%.

Die aminofunktionellen Aminopolydiorganosiloxane der allgemeinen Formel (IX) haben vorzugsweise eine mittlere Viskosität von 50 bis 100000 mPa*s, insbesondere 100 bis 15000 mPa*s bei 25° C. Die Umsetzung kann gegebenenfalls in Gegenwart eines geeigneten Lösemittels durchgeführt werden. Bevorzugt werden polare, Lösemittel wie Alkohole oder Ketone, Beispiele dafür sind Methanol, Ethanol, Propanol, Isopropanol, Aceton oder Ethylmethylketon. Bevorzugt erfolgt die Umsetzung bei Temperaturen im Bereich von 40° bis 120°C in Abhängigkeit des eingesetzten Lösemittels.

Die amidofunktionellen Aminopolydiorganosiloxane der allgemeinen Formel (I) (Komponente A) werden vorzugsweise in Form wässriger Zubereitungen, insbesondere Emulsionen eingesetzt. Diese enthalten, bezogen auf die Gesamtzusammensetzung, 2 bis 80 Gew.-% eines oder mehrerer amidofunktionelle Aminopolydiorganosiloxane der allgemeinen Formel (I). Ein geeignetes Verfahren zur Herstellung von feinteiligen Polydiorganosiloxanemulsionen ist beispielsweise bekannt aus US-A-5,302,657. Dort wird die Emulsion mit einem im Polydiorganosiloxan löslichen Emulgator in zwei Schritten hergestellt, wobei im ersten Schritt ein Konzentrat erhalten wird, welches im zweiten Schritt mit Wasser verdünnt wird.

Als Emulgatoren (Komponente B) können beliebige für die Herstellung von amidofuntionellen Aminopolydiorgansiloxan-Zubereitungen, insbesondere Emulsionen verwendbare Emulgatoren eingesetzt werden. Diese Zubereitungen, insbesondere Emulsionen enthalten, bezogen auf die Gesamtzusammensetzung 2 bis 40 Gew.-% eines oder mehrerer Emulgatoren.

Als anionische Emulgatoren eignen sich besonders:
1. Alkylsulfate, besonders solche mit einer Kettenlänge von 8 bis 18 C-Atomen und Alkylethersulfate mit 8 bis 18 C-Atomen im hydrophoben Rest und 1 bis 40 Ethylenoxid(EO)- bzw. Propylenoxid(PO)Einheiten.
2. Sulfonate, besonders Alkylsulfonate mit 8 bis 18 C-Atomen, Tauride, Ester und Halbester der Sulfobernsteinsäure mit einwertigen Alkoholen oder Alkylphenolen mit 4 bis 15 C-Atomen; ggf. können diese Alkohole oder Alkylphenole auch mit 1 bis 40 EO-Einheiten ethoxiliert sein.
3. Alkali- und Ammoniumsalze von Carbonsäuren mit 8 bis 20 C-Atomen mit Alkyl-, Aryl-, Alkyaryl- oder Aralkylrest.
4. Phosphorsäureteilester und deren Alkali- und Ammoniumsalze, besonders Alkyl- und Alkylarylphosphate mit 8 bis 20 C-Atomen im organischen Rest, Alkylether- bzw. Alkaryletherphosphate mit 8 bis 20 C-Atomen im Alkyl- bzw. Alkarylrest und 1 bis 40 EO-Einheiten.

Als nichtionische Emulgatoren eignen sich besonders:
5. Alkylpolyglycolether, vorzugsweise solche mit 4 bis 40 EO-Einheiten und Alkylresten von 8 bis 20 C-Atomen.
6. Alkylarylpolyglycolether, vorzugsweise solche mit 4 bis 40 EO-Einheiten und Alkylresten von 8 bis 20 C-Atomen in den Alkyl- und Arylresten.
7. Ethylenoxid/Propylenoxid (EO/PO) -Blockpolymere, vorzugsweise solche mit 4 bis 40 EO- bzw. PO-Einheiten.
8. Fettsäuren mit 6 bis 24 C-Atomen.
9. Naturstoffe und deren Derivate, wie Lecitin, Lanolin, Saponine, Cellulose; Cellulosealkylether und und Carboxyalkylcellulosen, deren Alkylgruppen jeweils bis zu 4 Kohlenstoffatome besitzen.
10. Polare Gruppen enthaltende lineare Polydiorganosiloxane, insbesondere Polyethergruppen enthaltende lineare Polydiorganosiloxane.
11. Gesättigte und ungesättigte alkoxylierte Fettamine mit 8 bis 24 C-Atomen.

Als kationische Emulgatoren eignen sich besonders:
12. Salze von primären, sekundären und tertiären Fettaminen mit 8 bis 24 C-Atomen mit Essigsäure, Salzsäure und Phosphorsäuren.
13. Quarternäre Alkylbenzolammoniumsalze, insbesondere solche deren Alkylgruppe 6 bis 24 C-Atome besitzt, insbesondere die Halogenide, Sulfate, Phosphate und Acetate.
14. Alkylpyridinium-, Alkylimidazolinium- und Alkyloxazoliniumsalze, insbesondere solche, deren Alkylkette bis zu 18 C-Atomen besitzt, speziell die Halogenide, Sulfate, Phosphate und Acetate.

Ferner eignen sich als Emulgatoren zur Herstellung der Emulsionen Fettsäurepolyglykolester, polyethoxylierte Fettsäureglyceride und Sorbitanester, Alkylpolyglycoside, Fettsäurealkylolamide, Alkylethercarbonsäuren, Alkarylethercarbonsäuren, ethoxilierte quartenäre Ammoniumsalze, Aminoxide, Betaine, Sulfobetaine und Sulfosuccinate.

Optional kann eine Komponente C), ein organisches Hydrotropikum in einer Menge von 0 bis 20 Gew.-%, bezogen auf die Gesamtzusammensetzung, eingesetzt werden. Unter einem Hydrotropikum versteht man einen Stoff, der die Wasserlöslichkeit einer schwerlöslichen Substanz verbessert und somit als Lösungsvermittler wirkt. Gleichzeitig verringert ein Hydrotropikum die Viskosität des zu verarbeitenden Stoffes. Es kann aus der Gruppe der polyfunktionellen Alkohole ausgewählt werden. So können Dialkohole mit 2 bis 10, bevorzugt 2 bis 6, insbesondere jedoch 2 - 4 Kohlenstoffatomen pro Molekül eingesetzt werden. Gut geeignet sind auch deren Mono- und Diether sowie die Mono- und Diester dieser Dialkohole. Als besonders bevorzugt zu verwendende Beispiele sind 1,2-Propylenglykol, Dipropylenglykol und Butyldiglykol.

Gegebenenfalls kann die Gesamtzusammensetzung als Komponente D) 0 bis 96 Gew.-% Wasser enthalten.

Als Komponente E) können sowohl anorganische als auch organische Säuren und/oder deren Anhydrid in einer Menge von 0 bis 5 Gew.-%, bezogen auf die Gesamtzusammensetzung, Verwendung finden. So werden z.B. als anorganische Säuren Salzsäure, Schwefelsäure oder Phosphorsäure benutzt. Alternativ dazu können auch organische Säuren wie z.B. Ameisensäure, Essigsäure, Gylcolsäure, Aldonsäuren wie z.B. Gluconsäure, Ascorbinsäure oder Uronsäuren wie z.B. Glucuronsäure als mehrbasige Säuren z.B. Oxalsäure, Citronensäure oder Aldarsäuren wie z.B. Glucar- oder Schleimsäure. Als Beispiel für ein Anhydrid einer organischen Säure ist Essigsäureanhydrid zu nennen.

Auf Grund der Tatsache, dass die beschriebenen amidofunktionellen Aminopolydiorganosiloxane eine extrem hohe Viskosität aufweisen und daher nur sehr schwer in eine wässrige Zubereitung; insbesondere Emulsion zu überführen sind, ist ein weiteres erfindungsgemäßes Verfahren zur Bereitung der oben beschriebenen Zubereitungen dadurch gekennzeichnet ist, dass man ein aminofunktionelles Polydiorganosiloxan der allgemeinen Formel (IX), 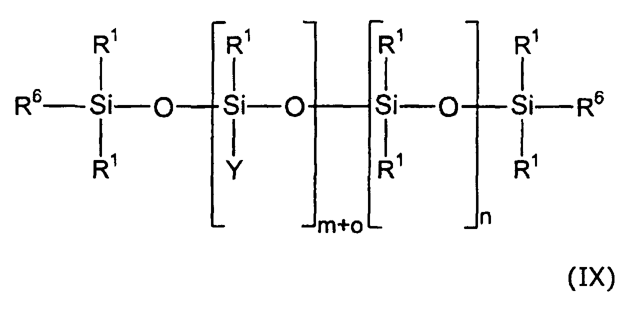 wobei R¹ für gleiche oder verschiedene, einwertige, gegebenenfalls Fluor-, Chlor- oder Brom-substituierte C₁- bis C₁₈-Kohlenwasserstoffreste, Wasserstoffatome, C₁- bis C₁₂-Alkoxy-, Hydroxyreste oder Alkylglykolreste steht,
R⁶ für R¹ und/oder eine Gruppe Y steht
Y für eine Gruppe der allgemeinen Formel (IV) und/oder (V) steht

-R³NHR⁴ (IV)

-R³NH(CH₂)ₚNHR⁴ (V)

wobei R³ für einen zweiwertigen C₁-bis C₁₈-Kohlenwasserstoffrest,
R⁴ für ein Wasserstoffatom oder einen gegebenenfalls Fluor-, Chloroder Brom substituierten C₁- bis C₁₀-Alkylrest steht,
m den durchschnittlichen Wert von 0,5 bis 50,
n den durchschnittlichen Wert von 10 bis 1500,
o den durchschnittlichen Wert von 0 bis 50 hat und
p für die Werte 2, 3 oder 4 steht,
mit einer zur Lactonbildung fähigen Hydroxycarbonsäure mit wenigstens 2 Hydroxylgruppen und/oder einem Lacton einer Hydroxycarbonsäure mit wenigstens 2 Hydroxylgruppen sowie den Komponenten B) und D) gegebenenfalls und/oder C) zusammengibt, bei Temperaturen im Bereich von 10 bis 90 °C zu dem erfindungsgemäßen amidofunktionellen Aminopolydiorganosiloxan umsetzt und die sich bildende, milchig trüben bis wasserklare Emulsion gegebenenfalls mit der Komponente E) auf schwach saure pH-Werte <7 einstellt.

Beispiele für R¹, R³, R⁴, R⁶, m, n, o und p sowie der Komponenten B), C) und E) entsprechen den zuvor Beschriebenen.

Zur Herstellung der zuvor beschriebenen Zubereitungen, insbesondere Emulsion wird eine zur Lactonbildung fähigen Hydroxycarbonsäure mit wenigstens 2 Hydroxylgruppen und/oder ein Lacton einer Hydroxycarbonsäure mit wenigstens 2 Hydroxylgruppen mit dem beschriebenen aminofunktionellen Polydiorganosiloxan umgesetzt. Bevorzugt wird eine zur Lactonbildung fähige Uron-, Aldar- oder Aldonsäure und/oder ihr Lacton, besonders bevorzugt die Gluconsäure und/oder ihr Lacton, eingesetzt. Wie dem Fachmann bekannt ist, stehen die genannten Säuren im wässrigen Medium im Gleichgewicht mit ihren Lactonen, so dass auch beim Einsatz einer Hydroxycarbonsäure mit wenigstens 2 Hydroxylgruppen sich das zugehörige Lacton bildet, das sich mit den beschriebenen aminofunktionellen Polydiorganosiloxanen zu den erfindungsgemäßen amidofunktionellen Polydiorganosiloxanen umsetzt.

Die Bildung der Emulsion kann bei Temperaturen im Bereich von 10 bis 90 °C während 0,5 bis 10 Stunden unter gleichmäßiger Durchmischung erfolgen. Bevorzugt werden Temperaturen im Bereich von 20 bis 70 °C.

Die Umsetzungszeiten bis zur Bildung der erfindungsgemäßen Zubereitungen, insbesondere Emulsionen sind abhängig von den angewendeten Temperaturen. Bei sehr niedrigen Temperaturen sind demnach vorzugsweise Umsetzungszeiten von 5 bis 10 Stunden, während bei erhöhten Temperaturen naturgemäß kürzere Reaktionszeiten, insbesondere zwischen 0,5 und 5 Stunden ausreichend.

Weiterer Gegenstand der Erfindung ist die Verwendung der amidofunktionellen Aminopolydiorganosiloxane zur Veredelung von organischen Fasern und Textilien in wässrigen Bädern und Anwendungsflotten, gegebenenfalls zusammen mit herkömmlichen aminofunktionell modifizierten Polydiorganosiloxanen zur Erzielung eines besonders weichen, eleganten Warengriffs.

Besonders zu erwähnen ist hier die Zwangsapplikation durch Klotzen bei der Anwendung auf dem Foulard, wobei sowohl nach dem Trocken-in-Naß- als auch nach dem Naß-in-Naßverfahren gearbeitet werden kann. Auch Auszieh-, Sprüh- oder Schaumapplikationsverfahren sind für den Auftrag der Emulsionen gut geeignet.

Besonders hervorzuheben ist die, gegenüber vergleichbaren, herkömmlichen aminofunktionellen Polydiorganosiloxanemulsionen deutlich verbesserte Emulsionsstabilität, die besonders auf schnelllaufenden Textilveredelungsmaschinen, wie z.B. auf den Jets zum Tragen kommt.

Mit den erfindungsgemäßen amidofunktionellen Aminopolydiorganosiloxanemulsionen ausgerüstete, weiße textile Materialien weisen eine deutlich verringerte Vergilbung durch die während der thermischen Beanspruchung angewendeten höheren Temperaturen auf als mit vergleichbaren, herkömmlichen aminofunktionellen Polydiorganosiloxanemulsionen.

Neben diesen vorteilhaften Eigenschaften weisen die erfindungsgemäßen Emulsionen während der Anwendung auch beim Auftreten von pH-Werten ≥ 7 eine hohe Stabilität auf, so dass selbst bei Summierung extrem ungünstiger Bedingungen, z.B. bei gleichzeitig auftretenden hohen pH-Werten und/oder hoher Flottentemperaturen und/oder sehr hohen Scherbeanspruchungen, wie sie z.B. auf schnelllaufenden Textilveredelungsmaschinen üblich sind, durch Koaleszenz verursachte Ausfällung von Silikonöl und damit Flecken auf dem Textilgut verhindert werden.

Vorteilhaft gegenüber Emulsionen kationisch funktionalisierter Polydiorganosiloxane, die bezüglich Scherstabilität, Vergilbung und pH-Stabilität ein ähnliches Eigenschaftsprofil aufweisen, ist die eklatant bessere Anionenstabilität, die die erfindungsgemäßen Zubereitungen, insbesondere Emulsionen aufweisen. Emulsionen kationisch funktionalisierter Polydiorganosiloxane führen sehr leicht zu Ausfällungen von Silikonöl und Übertragung auf das Textilgut in Gegenwart von z.B. verschleppten, anionischen Farbstoffresten oder anionischer Textilhilfsmittel, die beim Einsatz der erfindungsgemäßen, elektrisch neutralen amidofunktionellen Aminopolydiorganositoxanemulsionen nicht auftreten.

Selbstverständlich können die erfindungsgemäßen amidofunktionellen Aminopolydiorganosiloxanemulsionen jederzeit auch in Kombination mit anderen in der Textilausrüstung üblichen Chemikalien, wie z.B. Cellulosevernetzern, Vernetzungskatalysatoren, Textilweichmachern auf Basis von Fettsäureestern und/oder Fettsäureaminkondensationsprodukten, griffmodifizierenden Polymerdispersionen verschiedenster Zusammensetzung und optischen Aufhellern kombiniert werden.

### Ausführungsbeispiele

### Beispiel 1

36 g eines aminoethylaminopropylgruppenhaltigen Polydiorganosiloxans mit einer Viskosität von 3300 mPa*s und einem titrierbaren Stickstoffgehalt von w(N) = 0,6% wurden mit 1,38 g (0,00775 mol) Gluconsäurelacton versetzt und bei Raumtemperatur zu einer Mischung aus 6 g Isotridecylethoxylat mit 5 Ethylenoxideinheiten, 20 g Isotridecylethoxylat mit 7 Ethylenoxideinheiten und 70 g Wasser gegeben. Diese Mischung wurde 90 Minuten bei 60°C gerührt. Die zu Beginn milchig weiße, dünnflüssige Mischung wurde nach kurzer Zeit fast klar und deutlich viskoser. Anschließend wurde die fast klare Emulsion wieder auf Raumtemperatur abgekühlt und mit weiteren 66 g Wasser verdünnt. Die so erhaltene Mikroemulsion wurde mit Essigsäure auf einen pH-Wert von 6 eingestellt.

### Beispiel 2

In 80 Gramm Isopropanol wurden 4,56 g (0,0265 mol) Gluconsäurelacton gelöst und bei Raumtemperatur zu 300 g eines aminoethylaminopropylgruppenhaltigen Polydiorganosiloxans mit einer Viskosität von 3300 mPa*s und einem titrierbaren Stickstoffgehalt von w(N) = 0,6% gegeben. Die milchig weiße Mischung wurde 4 Stunden bei 80° C gerührt. Anschließend wurde das Lösemittel abdestilliert, dadurch erhielt man ein klares, extrem viskoses, gelbliches Öl mit einem titrierbaren Stickstoffgehalt von w(N) = 0,47%. Infrarot (Reinsubstanz auf NaCl-Platten): Amidbanden bei 1649 und 1541 cm⁻¹, Aminbande bei 1600 cm⁻¹.

### Beispiel 3

36 g eines aminoethylaminopropylgruppenhaltigen Polydiorganosiloxans mit einer Viskosität von 3300 mPa*s und einem titrierbaren Stickstoffgehalt von w(N) = 0,6% wurden mit 2,74 g (0,0155 mol) Gluconsäurelacton versetzt und bei Raumtemperatur zu einer Mischung aus 6 g Isotridecylethoxylat mit 5 Ethylenoxideinheiten, 20 g Isotridecylethoxylat mit 7 Ethylenoxideinheiten und 70 g Wasser gegeben. Diese Mischung wurde 90 Minuten bei 60°C gerührt. Die zu Beginn milchig weiße, dünnflüssige Mischung wurde nach kurzer Zeit fast klar und deutlich viskoser. Anschließend wurde die fast klare Emulsion wieder auf Raumtemperatur abgekühlt und mit weiteren 66 g Wasser verdünnt. Die so erhaltene Mikroemulsion wurde mit Essigsäure auf einen pH-Wert von 6 eingestellt.

### Beispiel 4

36 g eines aminoethylaminopropylgruppenhaltigen Polydiorganosiloxans mit einer Viskosität von 3300 mPa*s und einem titrierbaren Stickstoffgehalt von w(N) = 0,6% wurden mit 0,9 g (0,00505 mol) Gluconsäurelacton versetzt und bei Raumtemperatur zu einer Mischung aus 6 g Isotridecylethoxylat mit 5 Ethylenoxideinheiten, 20 g Isotridecylethoxylat mit 7 Ethylenoxideinheiten und 70 g Wasser gegeben. Diese Mischung wurde 90 Minuten bei 60°C gerührt. Die zu Beginn milchig weiße, dünnflüssige Mischung wurde nach kurzer Zeit fast klar und deutlich viskoser. Anschließend wurde die fast klare Emulsion wieder auf Raumtemperatur abgekühlt und mit weiteren 66 g Wasser verdünnt. Die so erhaltene Mikroemulsion wurde mit Essigsäure auf einen pH-Wert von 6 eingestellt.

### Beispiel 5

36 g eines aminoethylaminopropylgruppenhaltigen Polydiorganosiloxans mit einer Viskosität von 3300 mPa*s und einem titrierbaren Stickstoffgehalt von w(N) = 0,6% wurden mit 1,38 g (0,00704 mol) Gluconsäure versetzt und bei Raumtemperatur zu einer Mischung aus 6 g Isotridecylethoxylat mit 5 Ethylenoxideinheiten, 20 g Isotridecylethoxylat mit 7 Ethylenoxideinheiten und 70 g Wasser gegeben. Diese Mischung wurde 90 Minuten bei 60°C gerührt. Die zu Beginn milchig weiße, dünnflüssige Mischung wurde nach kurzer Zeit fast klar und deutlich viskoser. Anschließend wurde die fast klare, gelbliche Emulsion wieder auf Raumtemperatur abgekühlt und mit weiteren 66 g Wasser verdünnt. Die so erhaltene Mikroemulsion wurde mit Essigsäure auf einen pH-Wert von 6 eingestellt.

### Beispiel 6

36 g eines aminoethylaminopropylgruppenhaltigen Polydiorganosiloxans mit einer Viskosität von 3300 mPa*s und einem titrierbaren Stickstoffgehalt von w(N) = 0,6% wurden mit 1,38 g (0,00784 mol) Ascorbinsäure versetzt und bei Raumtemperatur zu einer Mischung aus 6 g Isotridecylethoxylat mit 5 Ethylenoxideinheiten, 20 g Isotridecylethoxylat mit 7 Ethylenoxideinheiten und 70 g Wasser gegeben. Diese Mischung wurde 90 Minuten bei 60°C gerührt. Die zu Beginn milchig weiße, dünnflüssige Mischung wurde nach kurzer Zeit fast klar und deutlich viskoser. Anschließend wurde die kräftig gelbe, fast klare Emulsion wieder auf Raumtemperatur abgekühlt und mit weiteren 66 g Wasser verdünnt. Die so erhaltene Mikroemulsion wurde mit Essigsäure auf einen pH-Wert von 6 eingestellt.

### Vergleichsbeispiel 1

36 g eines aminoethylaminopropylgruppenhaltigen Polydiorganosiloxans mit einer Viskosität von 3300 mPa*s und einem titrierbaren Stickstoffgehalt von w(N) = 0,6% wurden zu einer Mischung aus 6 g Isotridecylethoxylat mit 5 Ethylenoxideinheiten, 20 g Isotridecylethoxylat mit 7 Ethylenoxideinheiten und 70 g Wasser gegeben. Die trübe Emulsion wurde mit weiteren 68 g Wasser verdünnt und mit Essigsäure auf einen pH-Wert von 6 eingestellt, wobei man eine klare Mikroemulsion erhielt.

### Vergleichsbeispiel 2

30 g eines amidofunktionellen Polydiorganosiloxans der Fa. Dow Corning mit der Bezeichnung DC 2-8813 und einer Viskosität von 8000 mPa*s sowie einem Stickstoffgehalt von w(N) = 0,4% wurden zu einer Mischung aus 7,2 g C₉ - C₁₁ Alkohol mit 7 Ethylenoxideinheiten, 10,8 g Isotridecylethoxylat mit 5 Ethylenoxideinheiten und 14 g Wasser gegeben. Die Mischung wurde für 45 Minuten homogen gerührt und anschließend mit 137,5 g Wasser vorsichtig verdünnt. Die trübe Emulsion wurde mit Essigsäure auf einen pH-Wert von 6 eingestellt, wobei man eine klare Mikroemulsion erhielt.

### Vergleichsbeispiel 3

72 geines kationisch modifizierten Polydiorganosiloxans der Fa. Goldschmidt mit der Bezeichnung Tegopren 6922 wurden unter Rühren mit 126 g Wasser versetzt und anschließend mit Essigsäure auf einen pH-Wert von 6 eingestellt.

### Anwendungstechnische Beurteilung

Die erhaltenen Emulsionen der Beispiele 1 bis 6 und der Vergleichsbeispiele 1 bis 3 wurden hinsichtlich folgender Eigenschaften geprüft:

### a) Scherstabilität im sauren Milieu

Von den zu untersuchenden Polydiorganosiloxanemulsionen wurden 400 ml einer Lösung mit einer Konzentration von 20 g/l in einem 1000 ml Becherglas angesetzt, auf 40° C erwärmt und mit Essigsäure auf einen pH-Wert von 5 eingestellt. Anschließend wurde die Flotte eine Minute mit einem Schnellrührer (24000 U/min, Ultra Turrax von Janke & Kunkel) gerührt. Beurteilt wurde das Aussehen der Flotte nach 24 Stunden hinsichtlich Trübung und Abscheidungen.

### b) Scherstabilität im schwach alkalischen Milieu

Von den zu untersuchenden Polydiorganosiloxanemulsionen wurden 400 ml einer Lösung mit einer Konzentration von 20 g/l in einem 1000 ml Becherglas angesetzt, auf 40° C erwärmt und mit 10%-iger wässriger ammoniakalischer Lösung auf einen pH-Wert von 7,5 eingestellt. Anschließend wurde die Flotte eine Minute mit einem Schnellrührer (24000 U/min, Ultra Turrax von Janke & Kunkel) gerührt. Beurteilt wurde das Aussehen der Flotte nach 24 Stunden hinsichtlich Trübung und Abscheidungen.

### c) Anionenstabilität

200 ml Wasser wurden in einem 600 ml Becherglas mit 6 g Polydiorganosiloxanemulsion und 20 g einer Farbstofflösung (0,48 g/l Solar Discharge Orange 3 LG und 0,24 g/l Indosol Rubinol SF-RGN, beides Produkte der Fa. Clariant) gemischt und anschließend mit 60%iger Essigsäure auf einen pH-Wert von 5 eingestellt. Die Flotte wurde 10 Minuten mit einem Flügelrührer mit 2000 U/min gerührt und nach 24 Stunden beurteilt.

| Beispiel | Scherstabilität pH = 5 | Scherstabilität pH = 7,5 | Anionenstabilität |
|---|---|---|---|
| 1 | Blank Keine Abscheidungen | Leicht trüb Keine Abscheidungen | Geringe Abscheidungen |
| 2 | Opak Keine Abscheidungen | Trüb Keine Abscheidungen | Geringe Abscheidungen |
| 3 | Blank Keine Abscheidungen | Blank Keine Abscheidungen | Keine Abscheidungen |
| 4 | Opak Keine Abscheidungen | Trüb Keine Abscheidungen | Geringe Abscheidungen |
| 5 | Opak Keine Abscheidungen | Trüb Keine Abscheidungen | Geringe Abscheidungen |
| 6 | Opak Keine Abscheidungen | Trüb Keine Abscheidungen | Geringe Abscheidungen |
| Vgl. 1 | Trüb Geringe Abscheidungen | Stark Trüb Starke Abscheidungen | Starke Abscheidungen |
| Vgl. 2 | Opak Keine Abscheidungen | Opak Keine Abscheidungen | Geringe Abscheidungen |
| Vgl. 3 | Blank Keine Abscheidungen | Opak Keine Abscheidungen | Starke Abscheidungen |

### Textilausrüstung

Eine optisch aufgehellte Baumwollwebware (100 g/m²) wurde mit einer Flotte, die 20 g/l der nach den Beispielen 1 bis 9 hergestellten Emulsionen enthält, foulardiert, auf 70% Flottenaufnahme abgequetscht und während 4 min bei 120° C getrocknet. Es resultiert ein sehr weicher, angenehmer, seidiger und eleganter Griff des ausgerüsteten textilen Substrats. Darüber hinaus wies die so ausgerüstete Ware eine hohe Sprungelastizität und verbesserte Entknitterungseigenschaften auf. Anschließend wurden folgende anwendungstechnische Prüfungen durchgeführt:

### a) Griffbeurteilung

Zur Griffbeurteilung wurde ein erfahrenes Team zusammengestellt, das die anonymisierten Griffmuster, der mit den Emulsionen gemäß den Beispielen 1 bis 6 und den Vergleichsbeispielen 1 bis 3 ausgerüsteten Gewebe, mit Hilfe eines Handtests nach einer relativen Skala von 0 - 10, wobei der Wert 10 den besten Weichgriff darstellt, bewertet. Als Vergleichsprobe wurde ein unbehandeltes Gewebe der Testreihe zugegeben.

### b) Vergilbungsneigung

Die oben genannte, optisch aufgehellte Baumwollwebware (100 g/m²) wurde nach der beschriebenen Ausrüstung mit den Emulsionen gemäß den Beispielen 1 bis 6 und den Vergleichsbeispielen 1 bis 3 zusätzlich eine Minute bei 180 °C übertrocknet. Bewertet wurde die Vergilbungsneigung nach der Trocknung bei 120°C sowie nach der Behandlung bei 180° C. Als Vergleichsprobe wurde ein unbehandeltes Gewebe der Testreihe zugegeben.

Der Grad der Vergilbung wurde mit einem Farbmessgerät (Minolta Chromameter CR 331C) festgestellt und als b+ -Wert festgehalten. Abnehmende Vergilbungsneigung bedeutet kleinere b+ Werte.

| Applizierte Emulsion | Weichgriff | Vergilbungs-Neigung b+ (120° C) | Vergilbungs-Neigung b+ (180° C) |
|---|---|---|---|
| 1 | 10 | 1,43 | 3,34 |
| 2 | 8 | 1,48 | 3,57 |
| 3 | 10 | 1,33 | 2,24 |
| 4 | 8 | 1,45 | 3,55 |
| 5 | 8 | 1,53 | 3,53 |
| 6 | 7 | 1,52 | 3,68 |
| Vgl. 1 | 8 | 1,66 | 4,03 |
| Vgl. 2 | 6 | 1,15 | 2,58 |
| Vgl. 3 | 5 | 1,02 | 1,90 |
| unbehandelt | 0 | 0,65 | 1,49 |

## Patentansprüche

1. Amidofunktionelle Aminopolydiorganosiloxane der allgemeinen Formel (I) 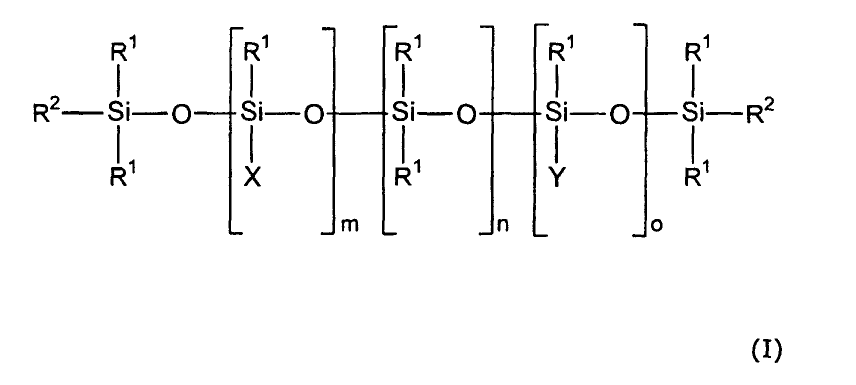 wobei R¹ für gleiche oder verschiedene, einwertige, gegebenenfalls Fluor-, Chlor- oder Brom-substituierte C₁- bis C₁₈-Kohlenwasserstoffreste, Wasserstoffatome, C₁- bis C₁₂-Alkoxy- oder Hydroxyreste oder Alkylglykolreste steht,
R² für R¹ und/oder eine der Gruppen X und/oder Y steht,
X eine Gruppe der allgemeinen Formeln (II) und/oder (III)
-R³NZR⁴ (II)
-R³NR⁵(CH₂)ₚNZR⁴ (III)
wobei R³ für einen zweiwertigen C₁-bis C₁₈-Kohlenwasserstoffrest,
R⁴ für ein Wasserstoffatom oder einen gegebenenfalls Fluor-, Chloroder Brom substituierten C₁- bis C₁₀-Alkylrest steht,
Z abgeleitet ist von Hydroxycarbonsäuren und oxidierten Mono- und Disacchariden, jeweils mit wenigstens 2 Hydroxylgruppen,
R⁵ für ein Wasserstoffatom und/oder Z steht,
Y für eine Gruppe der allgemeinen Formel (IV) und/oder (V) steht
-R³NHR⁴ (IV)
-R³NH(CH₂)ₚNHR⁴ (V)
wobei R³ und R⁴ die oben genannten Bedeutungen haben,
m den durchschnittlichen Wert von 0,5 bis 50,
n den durchschnittlichen Wert von 10 bis 1500,
o den durchschnittlichen Wert von 0 bis 50 hat und
p für die Werte 2, 3 oder 4 steht,
mit der Maßgabe, dass das Verhältnis von m zu o im Bereich von 10 : 1 bis 0,1 : 1 liegt.

2. Amidofunktionelle Aminopolydiorganosiloxane nach Anspruch 1, **dadurch gekennzeichnet, dass** Z abgeleitet ist von Uron-, Aldar und Aldonsäuren der allgemeinen Formeln (VI), (VII) und (VIII)
O=CH-[CH(OH)]ₛ-CO- (VI)
HOOC-[CH(OH)]ₛ-CO- (VII)
HOCH₂-[CH(OH)]ₛ-CO- (VIII),
mit 2 ≤ s ≤ 10.

3. Amidofunktionelle Aminopolydiorganosiloxane nach Anspruch 1 oder 2, **dadurch gekennzeichnet, dass** Z von Gluconsäure abgeleitet ist.

4. Amidofunktionelle Aminopolydiorganosiloxane nach einem der Ansprüche 1 bis 3, **dadurch gekennzeichnet, dass** das Verhältnis von m zu o im Bereich von 5 : 1 bis 1 : 1 liegt.

5. Verfahren zur Herstellung amidofunktioneller Aminopolydiorganosiloxane nach einem der Ansprüche 1 bis 4, wobei man ein aminofunktionelles Polyorganosiloxan der allgemeinen Formel (IX), 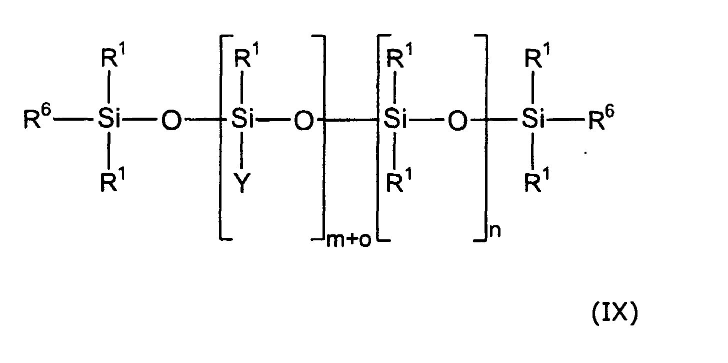 wobei R¹ für gleiche oder verschiedene, einwertige, gegebenenfalls Fluor-, Chlor- oder Brom-substituierte C₁- bis C₁₈-Kohlenwasserstoffreste, Wasserstoffatome, C₁- bis C₁₂-Alkoxy-, Hydroxyreste oder Alkylglykolreste steht,
R⁶ für R¹ und/oder eine Gruppe Y steht,
Y für eine Gruppe der allgemeinen Formel (IV) und/oder (V) steht
-R³NHR⁴ (IV)
-R³NH(CH₂)ₚNHR⁴ (V)
wobei R³ für einen zweiwertigen C₁-bis C₁₈-Kohlenwasserstoffrest,
R⁴ für ein Wasserstoffatom oder einen gegebenenfalls Fluor-, Chloroder Brom substituierten C₁- bis C₁₀-Alkylrest steht,
m den durchschnittlichen Wert von 0,5 bis 50,
n den durchschnittlichen Wert von 10 bis 1500,
o den durchschnittlichen Wert von 0 bis 50 hat und
p für die Werte 2, 3 oder 4 steht,
gegebenenfalls in Gegenwart eines Lösemittels mit einem Lacton einer Hydroxycarbonsäure mit wenigstens 2 Hydroxylgruppen bei Temperaturen im Bereich von 10° bis 150° C umsetzt.

6. Verfahren nach Anspruch 5, **dadurch gekennzeichnet, dass** man einen Stoffmengenüberschuss der Hydroxycarbonsäure und/oder des Lactons der Hydroxycarbonsäure von wenigstens 10 Gew.-%, insbesondere 10 bis 500 Gew.-%, vorzugsweise 20 bis 200 Gew.-%, bezogen auf das aminofunktionelle Polydiorganosiloxan einsetzt.

7. Zubereitungen enthaltend bezogen auf die Gesamtzusammensetzung, an
A) 2 bis 80 Gewichtsprozent eines oder mehrerer amidofunktioneller Aminopolydiorganosiloxane der allgemeinen Formel I nach einem der Ansprüche 1 und 3,
B) 2 bis 40 Gewichtsprozent eines Emulgators,
C) 0 bis 20 Gewichtsprozent eines Hydrotropikums und
D) 0 bis 96 Gewichtsprozent Wasser.

8. Zubereitung nach Anspruch 7 enthaltend, bezogen auf die Gesamtzusammensetzung
E) 0 bis 5 Gewichtsprozent anorganische oder organische Säure und/oder deren Anhydrid.

9. Verfahren zur Herstellung einer Zubereitung, enthaltend amidofunkionelle Aminopolyorganosiloxane der allgemeinen Formel I nach einem der Ansprüche 1 bis 4, gemäß Anspruch 7 oder 8, **dadurch gekennzeichnet, dass** man ein aminofunktionelles Polyorganosiloxan der allgemeinen Formel (IX), 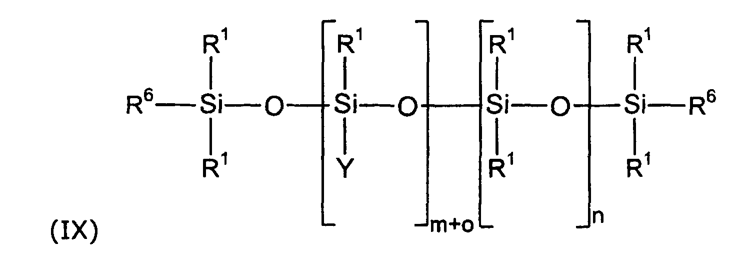 wobei R¹ für gleiche oder verschiedene, einwertige, gegebenenfalls Fluor-, Chlor- oder Brom-substituierte C₁- bis C₁₈-Kohlenwasserstoffreste, Wasserstoffatome, C₁- bis C₁₂-Alkoxy-, Hydroxyreste oder Alkylglykolreste steht,
R⁶ für R¹ und/oder eine Gruppe Y steht
Y für eine Gruppe der allgemeinen Formel (IV) und/oder (V) steht
-R³NHR⁴ (IV)
-R³NH(CH₂)ₚNHR⁴ (V)
wobei R³ für einen zweiwertigen C₁-bis C₁₈-Kohlenwasserstoffrest,
R⁴ für ein Wasserstoffatom oder einen gegebenenfalls Fluor-, Chloroder Brom substituierten C₁- bis C₁₀-Alkylrest steht,
m den durchschnittlichen Wert von 0,5 bis 50,
n den durchschnittlichen Wert von 10 bis 1500,
o den durchschnittlichen Wert von 0 bis 50 hat und
p für die Werte 2, 3 oder 4 steht,
mit einer zur Lactonbildung fähigen Hydroxycarbonsäure mit wenigstens 2 Hydroxylgruppen und/oder einem Lacton einer Hydroxycarbonsäure mit wenigstens 2 Hydroxylgruppen sowie den Komponenten B) und gegebenenfalls C), D) und/oder E) zusammengibt, bei Temperaturen im Bereich von 10° bis 90° C umsetzt und die sich bildende, milchig trüben bis wasserklare Emulsion gegebenenfalls mit der Komponente E) auf pH-Werte <7 einstellt.

10. Verwendung der amidofunktionellen Aminopolydiorganosiloxane der allgemeinen Formel I nach einem der Ansprüche 1 bis 4, gegebenenfalls in Form einer Zubereitung nach Anspruch 7 oder 8 zur Ausrüstung von organischen Fasern und Textilien.

11. Verwendung nach Anspruch 10, zur Veredelung organischen Fasern und Textilien in wässrigen Bädern und Anwendungsflotten, gegebenenfalls zusammen mit herkömmlichen aminofunktionell modifizierten Polydiorganosiloxanen, als Zwangsapplikation durch Klotzen bei der Anwendung auf dem Foulard, im Auszieh-, Sprüh- oder Schaumapplikationsverfahren, insbesondere auf schnelllaufenden Textilveredelungsmaschinen.

## Claims

1. Amido-functional aminopolydiorganosiloxanes of general formula (I) 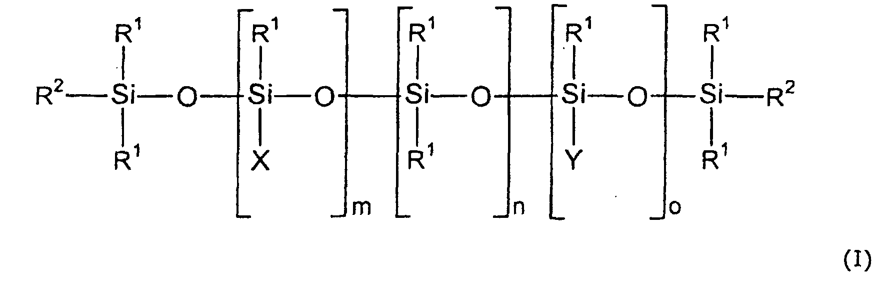 wherein R¹ represents the same or different monovalent C₁ to C₁₈ hydrocarbon residues optionally substituted with fluoro, chloro or bromo, hydrogen atoms, C₁ to C₁₂ alkoxy or hydroxy residues or alkylglycol residues;
R² represents R¹ and/or one of the groups X and/or Y;
X represents a group of general formula (II) and/or (III)
-R³NZR⁴ (II)
-R³NR⁵(CH₂)ₚNZR⁴ (III)
wherein R³ represents a divalent C₁ to C₁₈ hydrocarbon residue,;
R⁴ represents a hydrogen atom or a C₁ to C₁₀ alkyl residue optionally substituted with fluoro, chloro or bromo;
Z is derived from hydroxycarboxylic acids and oxidized mono- and disaccharides, each having at least 2 hydroxy groups;
R⁵ represents a hydrogen atom and/or Z;
Y represents a group of general formula (IV) and/or (V)
-R³NHR⁴ (IV)
-R³NH(CH₂)ₚNHR⁴ (V)
wherein R³ and R⁴ have the above mentioned properties;
m has an average value of from 0.5 to 50;
n has an average value of from 10 to 1500;
o has an average value of from 0 to 50; and
p represents the values 2, 3 or 4;
with the proviso that the ratio of m to o is within a range of from 10:1 to 0.1:1.

2. The amido-functional aminopolydiorganosiloxanes according to claim 1, **characterized in that** Z is derived from uronic, aldaric and aldonic acids of general formulas (VI), (VII) and (VIII), respectively:
O=CH-[CH(OH)]ₛ-CO- (VI)
HOOC-[CH(OH)]ₛ-CO- (VII)
HOCH₂-[CH(OH)]ₛ-CO- (VIII),
with 2 ≤ s ≤ 10.

3. The amido-functional aminopolydiorganosiloxanes according to claim 1 or 2, **characterized in that** Z is derived from gluconic acid.

4. The amido-functional aminopolydiorganosiloxanes according to any of claims 1 to 3, **characterized in that** the ratio of m to o is within a range of from 5:1 to 1:1.

5. A process for the preparation of amido-functional aminopolydiorganosiloxanes according to any of claims 1 to 4, wherein an amino-functional polydiorganosiloxane of general formula (IX) 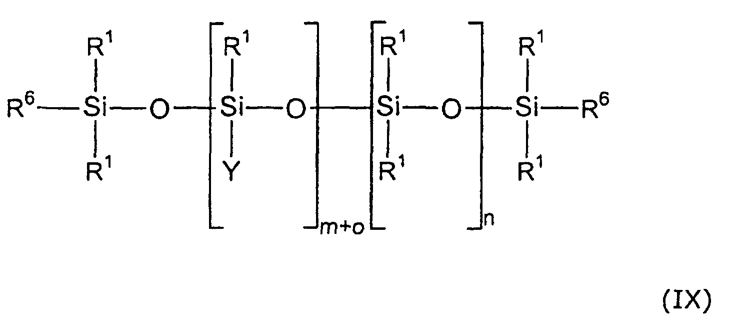 wherein R¹ represents the same or different monovalent C₁ to C₁₈ hydrocarbon residues optionally substituted with fluoro, chloro or bromo, hydrogen atoms, C₁ to C₁₂ alkoxy or hydroxy residues or alkylglycol residues;
R⁶ represents R¹ and/or a group Y;
Y represents a group of general formula (IV) and/or (V)
-R³NHR⁴ (IV)
-R³NH(CH₂)ₚNHR⁴ (V)
wherein R³ represents a divalent C₁ to C₁₈ hydrocarbon residue;
R⁴ represents a hydrogen atom or a C₁ to C₁₀ alkyl residue optionally substituted with fluoro, chloro or bromo;
m has an average value of from 0.5 to 50;
n has an average value of from 10 to 1500;
o has an average value of from 0 to 50; and
p represents the values 2, 3 or 4;
with the proviso that the ratio of m to o is within a range of from 10:1 to 0.1:1;
is reacted, optionally in the presence of a solvent, with a lactone of a hydroxycarboxylic acid with at least 2 hydroxy groups at temperatures within a range of from 10 to 150 °C.

6. The process according to claim 5, **characterized in that** a molar excess of said hydroxycarboxylic acid and/or lactone of said hydroxycarboxylic acid of at least 10% by weight, especially from 10 to 500% by weight, preferably from 20 to 200% by weight, is employed, based on said amino-functional polydiorganosiloxane.

7. Formulations containing, based on the total composition:
A) from 2 to 80% by weight of one or more amido-functional aminopolydiorganosiloxanes of general formula I according to any of claims 1 and 3;
B) from 2 to 40% by weight of an emulsifier;
C) from 0 to 20% by weight of a hydrotropic agent; and
D) from 0 to 96% by weight of water.

8. The formulation according to claim 7, further containing, based on the total composition:
E) from 0 to 5% by weight of inorganic or organic acid and/or its anhydride.

9. A method for the preparation of a formulation containing amido-functional aminopolydiorganosiloxanes of general formula I according to any of claims 1 to 4, according to claim 7 or 8, **characterized in that** an amino-functional polyorganosiloxane of general formula (IX) 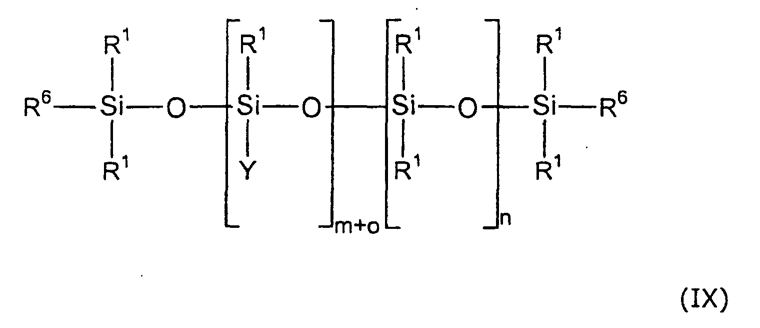 wherein R¹ represents the same or different monovalent C₁ to C₁₈ hydrocarbon residues optionally substituted with fluoro, chloro or bromo, hydrogen atoms, C₁ to C₁₂ alkoxy or hydroxy residues or alkylglycol residues;
R⁶ represents R¹ and/or a group Y;
Y represents a group of general formula (IV) and/or (V)
-R³NHR⁴ (IV)
-R³NH(CH₂)ₚNHR⁴ (V)
wherein R³ represents a divalent C₁ to C₁₈ hydrocarbon residue;
R⁴ represents a hydrogen atom or a C₁ to C₁₀ alkyl residue optionally substituted with fluoro, chloro or bromo;
m has an average value of from 0.5 to 50;
n has an average value of from 10 to 1500;
o has an average value of from 0 to 50; and
p represents the values 2, 3 or 4;
is combined with a hydroxycarboxylic acid capable of lactone formation and having at least 2 hydroxy groups and/or a lactone of a hydroxycarboxylic acid with at least 2 hydroxy groups, and components B) and optionally C), D) and/or E) at temperatures within a range of from 10 to 90°C, and the milky to water-clear emulsion produced is optionally adjusted with component E) to pH values of < 7.

10. Use of the amido-functional aminopolydiorganosiloxanes of general formula I according to any of claims 1 to 4, optionally in the form of a formulation according to claim 7 or 8, for the finishing of inorganic fibers and textiles.

11. The use according to claim 10 for the finishing of inorganic fibers and textiles in aqueous baths and application liquors, optionally together with conventional amino-functionally modified polydiorganosiloxanes, as a forced application by padding when employed on the padding machine, in an exhausting, spraying or foam application method, especially on fast-running textile finishing machines.

## Revendications

1. Aminopolydiorganosiloxanes à groupes fonctionnels amide, de formule générale (I) : 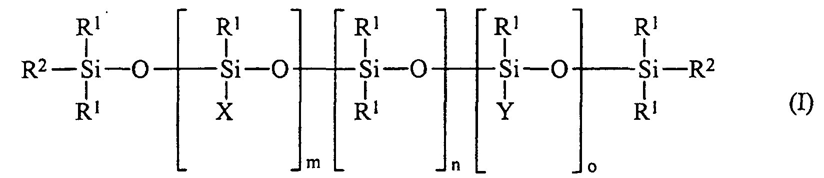 dans laquelle
les symboles R' représentent des restes monovalents d'hydrocarbures en C₁₋₁₈, identiques ou différents, éventuellement fluorés, chlorés ou bromés, des atomes d'hydrogène, des groupes hydroxyle ou alcoxy en C₁₋₁₂, ou des restes d'alkylèneglycol,
les symboles R² représentent les mêmes choses que R¹ et/ou l'un des groupes représentés par X et/ou Y,
X représente un groupe de formule générale (II) et/ou (III) :
-R³NZR⁴ (II)
-R³NR⁵(CH₂)ₚNZR⁴ (III)
où R³ représente un reste divalent d'hydrocarbure en C₁₋₁₈, R⁴ représente un atome d'hydrogène ou un groupe alkyle en C₁₋₁₀, éventuellement fluoré, chloré ou bromé, Z représente un reste dérivé d'un acide hydroxycarboxylique ou d'un monosaccharide ou disaccharide oxydé, comportant dans chaque cas au moins 2 groupes hydroxyle, et R⁵ représente un atome d'hydrogène et/ou ce que représente Z,
Y représente un groupe de formule générale (IV) et/ou (V) :
-R³NHR⁴ (IV)
-R³NH(CH₂)ₚNHR⁴ (V)
où R³ et R⁴ ont les significations indiquées ci-dessus,
m vaut en moyenne de 0,5 à 50,
n vaut en moyenne de 10 à 1500,
o vaut en moyenne de 0 à 50,
et p vaut 2, 3 ou4,
sous réserve que le rapport de m à o vaille de 10/1 à 0,1/1.

2. Aminopolydiorganosiloxanes à groupes fonctionnels amide, conformes à la revendication 1, **caractérisés en ce que** Z représente un reste dérivé d'un acide uronique, d'un acide aldarique ou d'un acide aldonique, de formule générale (VI), (VII) ou (VIII) :
O=CH-[CH(OH)]ₛ-CO- (VI)
HOOC-[CH(OH)]ₛ-CO- (VII)
HOCH₂-[CH(OH)]ₛ-CO- (VIII)
où 2 ≤ s ≤ 10.

3. Aminopolydiorganosiloxanes à groupes fonctionnels amide, conformes à la revendication 1 ou 2, **caractérisés en ce que** Z représente un reste dérivé de l'acide gluconique.

4. Aminopolydiorganosiloxanes à groupes fonctionnels amide, conformes à l'une des revendications 1 à 3, **caractérisés en ce que** le rapport de m à o vaut de 5/1 à 1/1.

5. Procédé de préparation d'aminopolydiorganosiloxanes à groupes fonctionnels amide, conformes à l'une des revendications 1 à 4, dans lequel on fait réagir un polyorganosiloxane à groupes fonctionnels amine de formule générale (IX) : 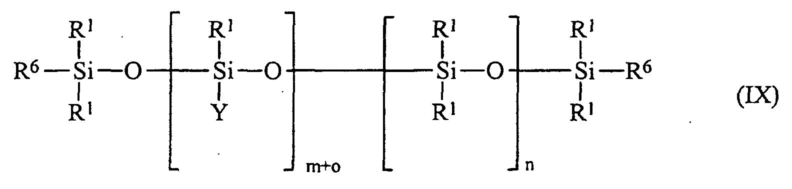 dans laquelle
les symboles R' représentent des restes monovalents d'hydrocarbures en C₁₋₁₈, identiques ou différents, éventuellement fluorés, chlorés ou bromés, des atomes d'hydrogène, des groupes hydroxyle ou alcoxy en C₁₋₁₂, ou des restes d'alkylèneglycol,
les symboles R⁶ représentent les mêmes choses que R¹ et/ou un groupe représenté par Y,
Y représente un groupe de formule générale (IV) et/ou (V) :
-R³NHR⁴ (IV)
-R³NH(CH₂)ₚNHR⁴ (V)
où R³ représente un reste divalent d'hydrocarbure en C₁₋₁₈, et R⁴ représente un atome d'hydrogène ou un groupe alkyle en C ₁₋₁₀, éventuellement fluoré, chloré ou bromé,
m vaut en moyenne de 0,5 à 50,
n vaut en moyenne de 10 à 1500,
o vaut en moyenne de 0 à 50,
et p vaut 2, 3 ou 4,
éventuellement en présence d'un solvant, avec une lactone d'un acide hydroxycarboxylique comportant au moins 2 groupes hydroxyle, à une température de 10 à 150 °C.

6. Procédé conforme à la revendication 5, **caractérisé en ce que** l'on emploie l'acide hydroxycarboxylique et/ou la lactone d'acide hydroxycarboxylique en excès, par rapport au polydiorganosiloxane à groupes fonctionnels amine, d'au m oins 10 % en poids, en particulier de 10 à 500 % en poids et de préférence de 20 à 200 % en poids.

7. Composition contenant :
A) 2 à 80 % en poids d'un ou de plusieurs aminopolydiorganosiloxanes à groupes fonctionnels amide, de formule générale (I), conformes à l'une des revendications 1 à 3,
B) 2 à 40 % en poids d'un émulsifiant,
C) 0 à 20 % en poids d'un agent hydrotrope,
D) et 0 à 96 % en poids d'eau,
ces pourcentages étant rapportés au poids total de la composition.

8. Composition conforme à la revendication 7, qui contient :
E) 0 à 5 % en poids d'un acide inorganique ou organique et/ou d'un anhydride d'acide,
ce pourcentage étant rapporté au poids total de la composition.

9. Procédé de préparation d'une composition contenant des aminopolydiorganosiloxanes à groupes fonctionnels amide, de formule générale (I), conformes à l'une des revendications 1 à 4, laquelle composition est conforme à la revendication 7 ou 8, **caractérisé en ce qu'**on met un polyorganosiloxane à groupes fonctionnels amine, de formule générale (IX) : 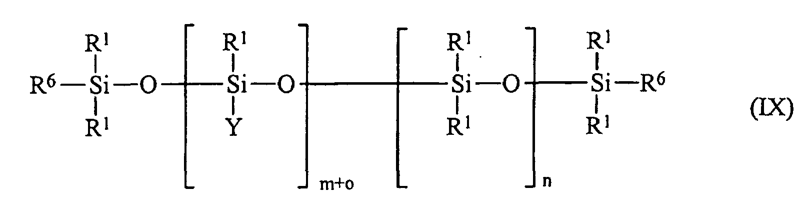 dans laquelle
les symboles R¹ représentent des restes monovalents d'hydrocarbures en C₁₋₁₈, identiques ou différents, éventuellement fluorés, chlorés ou bromés, des atomes d'hydrogène, des groupes hydroxyle ou alcoxy en C₁₋₁₂, ou des restes d'alkylèneglycol,
les symboles R⁶ représentent les mêmes choses que R¹ et/ou un groupe représenté par Y,
Y représente un groupe de formule générale (IV) et/ou (V) :
-R³NHR⁴ (IV)
-R³NH(CH₂)ₚNHR⁴ (V)
où R³ représente un reste divalent d'hydrocarbure en C₁₋₁₈, et R⁴ représente un atome d'hydrogène ou un groupe alkyle en C₁₋₁₀, éventuellement fluoré, chloré ou bromé,
m vaut en moyenne de 0,5 à 50,
n vaut en moyenne de 10 à 1500,
o vaut en moyenne de 0 à 50,
et p vaut 2, 3 ou 4,
en présence d'un acide hydroxycarboxylique lactonisable comportant au moins 2 groupes hydroxyle et/ou d'une lactone d'un acide h ydroxycarboxylique comportant au moins 2 groupes hydroxyle, ainsi qu'en présence du composant (B) et, le cas échéant, des composants (C), (D) et/ou (E), on fait réagir le tout à une température de 10 à 90 °C, et l'on ajuste éventuellement à une valeur inférieure à 7 le pH de l'émulsion ainsi formée, trouble comme du lait à limpide comme de l'eau, à l'aide du composant (E).

10. Emploi d'aminopolydiorganosiloxanes à groupes fonctionnels amide de formule générale (I), conformes à l'une d es revendications 1 à 4, éventuellement sous la forme d'une composition conforme à la revendication 7 ou 8, pour le finissage de fibres et textiles organiques.

11. Emploi conforme à la revendication 10, pour le finissage de fibres et textiles organiques en bains d'application ou en bains aqueux, éventuellement en présence des polydiorganosiloxanes modifiés à groupes fonctionnels amine d'origine, en application forcée par foulardage à l'aide d'un foulard, dans un procédé d'application par épuisement, pulvérisation ou moussage, en particulier sur des machines de finissage de textiles à vitesse élevée.
